# EUROPEAN PATENT APPLICATION

(11) **EP 4 492 483 A1**
(43) Date of publication of application: **15.01.2025**
(21) Application number: 24170280.2
(22) Date of filing: 15.04.2024
(51) Int. Cl.: H01M 4/04, H01M 4/139

(54) **ELECTRODE FOR RECHARGEABLE BATTERY, ELECTRODE ASSEMBLY INCLUDING THE SAME, AND ACTIVE MATERIAL COATING DEVICE FOR MANUFACTURING THE SAME**

(30) Priority: 14.07.2023 KR 20230092027
(71) Applicant: Samsung SDI Co., Ltd., Yongin-si, Gyeonggi-do 17084 (KR)
(72) Inventor: PARK, Gwangwon, 17084 Yongin-si (KR); AHN, Won-Gi, 17084 Yongin-si (KR); BAE, Juhye, 17084 Yongin-si (KR); JEONG, Min-young, 17084 Yongin-si (KR); LEE, Taeil, 17084 Yongin-si (KR)
(74) Representative: Marks & Clerk LLP

(57) **Abstract**

An example embodiment of the present disclosure provides an electrode for a rechargeable battery, the electrode including a substrate, a lower layer formed on the substrate, a pattern layer formed on the lower layer, the pattern layer having a plurality of portions, a filling layer formed on the lower layer and located between the portions of the pattern layer, and an upper layer formed on the pattern layer and the filling layer.

## Description

### BACKGROUND OF THE INVENTION

### (a) Field of the Invention

Examples of this disclosure relate to an electrode for a rechargeable battery, an electrode assembly including the same, and an active material coating device for manufacturing the same.

### (b) Description of the Related Art

A rechargeable battery is a battery that is repeatedly charged and discharged, unlike a primary battery which is typically charged only once and then discarded upon discharge. A small-capacity rechargeable battery may be used in portable small electronic devices such as, e.g., mobile phones, laptop computers, camcorders, and the like. A large-capacity and high-density rechargeable battery may be used as a power source or energy storage for, e.g., driving a motor of a hybrid vehicle, or an electric vehicle.

As such, as the demand for rechargeable batteries used in various fields increases, the demand for high-performance, high-capacity, and long-life batteries increases.

A negative electrode, or anode, of a current rechargeable battery uses graphite, but although such an electrode has a capacity that is close to the theoretical capacity (~372 mAh/g), it may be advantageous to use a negative active material such as, e.g., metallic lithium (~3860 mAh/g), or silicon (~4200 mAh/g), to implement a high capacity with a relatively low capacity.

However, a number of challenges may have to be addressed when using active materials to realize high capacity. Such challenges may include, e.g., short circuiting due to resin phase growth during charging and discharging of the battery, in the case of a metallic lithium anode, or a drop in lifespan due to a large volume change (~ 400%) during charging and discharging of the battery, in the case of a silicon anode.

### SUMMARY OF THE INVENTION

Example embodiments of this disclosure include an electrode for a rechargeable battery, an electrode assembly including the same, and an active material coating device for manufacturing the same that may increase cell lifespan without deteriorating electrical properties due to volume changes while using an active material containing silicon to achieve high capacity.

An example embodiment of the present disclosure provides an electrode for a rechargeable battery, the electrode including a substrate, a lower layer formed on the substrate, a pattern layer formed on the lower layer and including a plurality of portions such as, e.g., a plurality of columns, a filling layer formed on the lower layer and disposed or located between the portions or columns of the pattern layer, and an upper layer formed on the pattern layer and the filling layer.

In various examples, the pattern layer may have relatively greater expansion properties than the filling layer, the lower layer, and the upper layer, and the filling layer, the lower layer, and the upper layer may have relatively smaller expansion properties than the pattern layer.

In other examples, the lower layer, the filling layer, and the upper layer may include a carbon-based active material (e.g. at least one of the lower layer, the filling layer, and the upper layer may include a carbon-based active material), and the pattern layer may include a silicon-based active material.

For example, the filling layer and the upper layer may be made of or include the same active material.

In another example, the pattern layer may have a higher viscosity than the filling layer and the upper layer.

The viscosity of the upper layer and the filling layer may be equal to about 3,000±1 ,500 mPas, and the viscosity of the pattern layer may be equal to about 9,500±4,500 mPas.

In various examples, the plurality of portions or columns of the pattern layer may have a long length in one direction.

In other examples, the plurality of portions or columns of the pattern layer may be configured or arranged in a matrix.

Another example embodiment of the present disclosure provides an active material coating device, including a slot die provided with a first opening, a second opening, and a third opening, first spacers respectively installed on both sides of the first opening to form a first discharge port, second spacers installed at regular intervals in the second opening to form a plurality of second discharge ports, and a third spacer installed in the third opening to form a third discharge port. The third spacer includes a first portion at a position corresponding to one of the second discharge ports of the second opening, and a second portion at a position corresponding to the first spacer.

For example, the third discharge port may include a first sub discharge port (e.g. a first small discharge port) at a position corresponding to the second spacer and a second sub discharge port (e.g. a second small discharge port) at a position corresponding to the first discharge port. The first small discharge port and the second small discharge port may be connected to form a single discharge port.

According to the example embodiment of the present disclosure, it is possible to provide an electrode for a rechargeable battery, an electrode assembly including the same, and an active material coating device for manufacturing the same that may limit or minimize volume expansion while using a silicon active material to realize high capacity.

At least some of the above and other features of the invention are set out in the claims.

### BRIEF DESCRIPTION OF THE DRAWINGS

FIG. 1 illustrates a top plan view of a negative electrode according to an example embodiment of the present disclosure.
FIG. 2 illustrates a cross-sectional view taken along line II-II' of FIG. 1.
FIG. 3 illustrates a top plan view of a negative electrode according to another example embodiment of the present disclosure.
FIG. 4 illustrates a method of forming an active material according to an example embodiment of the present disclosure.
FIG. 5 and FIG. 6 illustrate top plan views of a slot die of an active material coating device shown in FIG. 4.
FIG. 7 illustrates a schematic perspective view of a rechargeable battery according to an example embodiment of the present disclosure.
FIG. 8 is a cross-section view along line VIII-VIII' of FIG. 7.

### DETAILED DESCRIPTION OF EXAMPLE EMBODIMENTS

Examples of the present disclosure are described more fully hereinafter with reference to the accompanying drawings, in which example embodiments of the invention are shown. As those skilled in the art would realize, the described example embodiments may be modified in various different ways, all without departing from the scope of the present disclosure. The drawings and description are to be regarded as illustrative in nature and not restrictive. Like reference numerals designate like elements throughout the specification.

When the terms "about" or "substantially" are used in this specification in connection with a numerical value, it is intended that the associated numerical value includes a tolerance of ±10% around the stated numerical value. When ranges are specified, the range includes all values therebetween such as increments of 0.1%.

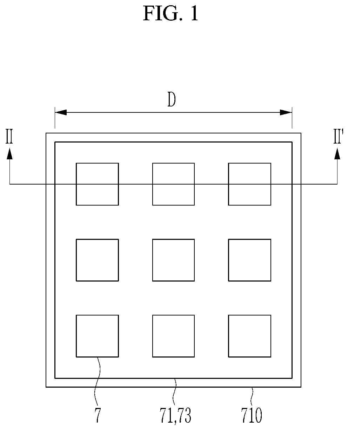

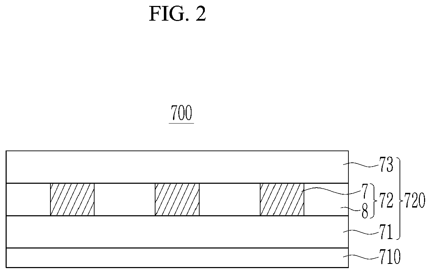

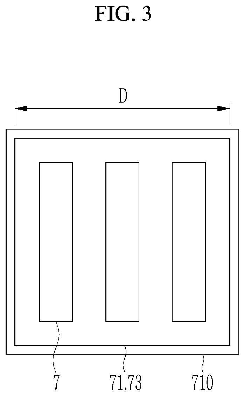

FIG. 1 illustrates a top plan view of a negative electrode according to an example embodiment of the present disclosure, FIG. 2 illustrates a cross-sectional view taken along line II-II' of FIG. 1, and FIG. 3 illustrates a top plan view of a negative electrode according to another example embodiment of the present disclosure.

As shown in FIG. 1 and FIG. 2, a negative electrode 700 according to an example embodiment of the present disclosure includes a substrate 710 and a negative active material layer 720 formed on the substrate 710. The negative active material layer 720 may be configured of or include a lower layer 71, a middle layer 72, and an upper layer 73.

The substrate 710 may be any material that does not react with lithium, that is, any material that does not form an alloy or compound with lithium and that is conductive. For example, the substrate 710 may be or include a metal or an alloy. The metal may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof. The substrate 710 may have a shape selected from among, for example, a sheet, a foil, a film, a plate, a porous body, a mesoporous body, a through hole-containing body, a polygonal ring body, a mesh body, a foam body, and a non-woven fabric, but is not limited thereto, and any form used in the art may be used.

The negative active material layer 720 may include, e.g., a negative active material, a binder, and a selectively conductive material. In other examples, the negative active material may include a carbon-based active material or a silicon-based active material.

The negative active material layer 720 according to the example embodiment of the present disclosure may include the lower layer 71, the middle layer 72, and the upper layer 73. The lower layer 71, the upper layer 73, and the middle layer 72 may include different negative active materials.

The lower layer 71 may have, or may be formed to have, a uniform thickness on the entire surface of the substrate 710.

The lower layer 71 may include a carbon-based active material. The carbon-based active material is a carbon-containing active material substantially used in a negative active material layer, and may include a crystalline carbon, an amorphous carbon, or a combination thereof. Examples of the crystalline carbon may include graphite such as amorphous, flake, spherical, or fibrous natural graphite or artificial graphite, and examples of the amorphous carbon may include soft carbon, hard carbon, mesophase pitch carbon, fired coke, and the like.

The middle layer 72 includes a filling layer 8 that fills a space between portions or columns of a pattern layer 7.

The portions or columns of the pattern layer 7 may be in a matrix form and disposed at regular intervals. The planar shape is illustrated in the drawings as a quadrangular shape, but is not limited thereto, and may be formed in various shapes such as, e.g., a circular shape, an elliptical shape, or a polygonal shape such as a pentagonal shape. In addition, the pattern layer 7 may be formed long in one direction as shown in FIG. 3.

The pattern layer 7 may include a silicon-based active material capable of realizing a relatively higher capacity than the filling layer 8, the lower layer 71, and the upper layer 73, and may have a relatively high expansion rate compared to other layers of the negative electrode 700.

Specifically, the silicon-based active material may include silicon, a silicon-carbon composite, SiOₓ (0<x<2), a Si-Q alloy (the Q is an element selected from alkali metals, alkaline earth metals, Group 13 elements, Group 14 elements, Group 15 elements, Group 16 elements, transition metals, rare earth elements, and combinations thereof, but not Si), or a combination thereof, and at least one of silicon-carbon composite and the Si-Q alloy may be mixed with SiO₂ and used. The element Q may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and combinations thereof.

For example, the silicon-based active material may include a silicon-carbon composite including silicon particles and a first carbon-based material. For example, the first carbon-based material may be or include a crystalline carbon, an amorphous carbon, or a combination thereof. When the silicon-carbon composite is used as the silicon-based active material, stable cycle characteristics may be realized while realizing high capacity.

In the silicon-carbon composite including the silicon particles and the first carbon-based material, the content of the silicon particles may be in a range of, e.g., 30 wt% to 70 wt%, or for example, in a range of 40 wt% to 50 wt%. The content of the first carbon-based material may be in a range of, e.g., 70 wt% to 30 wt%, or for example, in a range of 50 wt% to 60 wt%. When the content of the silicon particles and the first carbon-based material is within the above ranges, the silicon-carbon composite may provide high capacity characteristics and as well as improved lifespan characteristics.

Alternatively, the silicon-based active material may include a silicon-carbon composite including a core mixed with silicon particles, and a second carbon-based material and a third carbon-based material surrounding the core. The silicon-carbon composite may realize a high capacity while simultaneously or contemporaneously improving the capacity maintenance rate and high-temperature lifespan characteristics of the battery.

The filling layer 8 may be made of or include a material having a relatively less filling capacity and expansion than the filling capacity and expansion of the pattern layer 7, and may be made of or include, for example, a carbon-based active material. The filling layer 8 may be made of or include the same negative active material as the lower layer 71.

The filling layer 8 has a relatively smaller expansion property than the pattern layer 7 and is configured to fill the gap between the portions or columns of the pattern layer 7, so that at least one portion or column, or each portion or column, of the pattern layer 7 is surrounded by the filling layer 8 or the filling layer 8 is on both sides of each, or at least one, portion or column of the pattern layer 7. Accordingly, even if the pattern layer 7 is to be expanded during charging and discharging, the pattern layer 7 may not easily expand due to the filling layer 8, and may thus maintain a shape thereof. In addition, the filling layer 8 has a smaller expansion property than the pattern layer 7, so there is little change in shape during charging and discharging.

The upper layer 73 may be formed with a uniform thickness on substantially the entire surface of the middle layer 72, and may be made of or include the same active material as the lower layer 71 or the filling layer 8.

As described above, in the example embodiment of the present disclosure, a silicon active material having high expansion property is used to implement high capacity, while reducing or substantially preventing the silicon active material from expanding during charging and discharging.

Meanwhile, the lower layer 71, middle layer 72, and upper layer 73 may further include a binder and a conductive material along with the negative active material.

The binder may serve to adhere the negative active material particles to each other and also to reliably adhere the negative active material to a substrate that may be, e.g., a current collector. As the binder, a non-aqueous binder, an aqueous binder, or a combination thereof may be used.

The non-aqueous binder may include, e.g., an ethylenepropylene copolymer, polyacrylonitrile, polystyrene, polyvinylchloride, carboxylated polyvinylchloride, polyvinylfluoride, polyurethane, polytetrafluoroethylene, polyvinylidene fluoride, polyethylene, polypropylene, polyamideimide, polyimide, or any combination thereof.

The aqueous binder may include styrene-butadiene rubber, acrylated styrene-butadiene rubber (ABR), acrylonitrile-butadiene rubber, acrylic rubber, butyl rubber, fluorine rubber, polymer containing ethylene oxide, polyvinylpyrrolidone, polyepichlorohydrin, polyphosphazene, ethylene propylene diene copolymer, polyvinylpyridine, chlorosulfonated polyethylene, latex, polyester resin, acrylic resin, phenol resin, epoxy resin, polyvinyl alcohol, or any combination thereof.

When the aqueous binder is used as the binder, a thickener, that is, a cellulose-based compound capable of imparting viscosity, may be further included. As the cellulose-based compound, at least one of carboxymethyl cellulose, hydroxypropylmethyl cellulose, methyl cellulose, or alkali metal salts thereof may be mixed and used. Na, K, or Li may be used as the alkali metal. The use content of the cellulose-based compound may be in a range of, e.g., 0.1 to 3 parts by weight based on 100 parts by weight of the negative active material.

The conductive material is used in order to give conductivity to the electrode, and may be or include any material as long as the electronic conductive material does not trigger a chemical change in the battery. Examples of the conductive material may include a carbon-based material such as natural graphite, artificial graphite, carbon black, acetylene black, Ketjen black, and carbon fiber, a metal powder such as copper, nickel, aluminium, and silver, a metal-based material such as a metal fiber, a conductive polymer such as a polyphenylene derivative, or any mixture thereof.

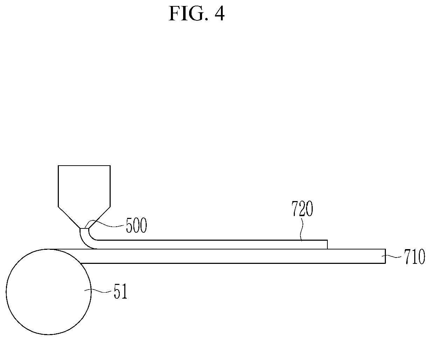

The lower layer, the middle layer, and the upper layer forming the negative active material layer according to the example embodiment of the present disclosure described above may be contemporaneously or simultaneously formed, which will be described in detail with reference to FIG. 4 to FIG. 6.

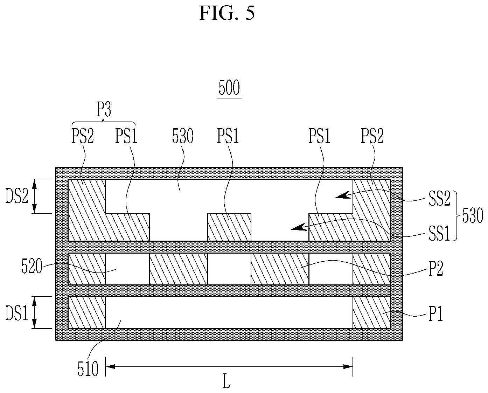

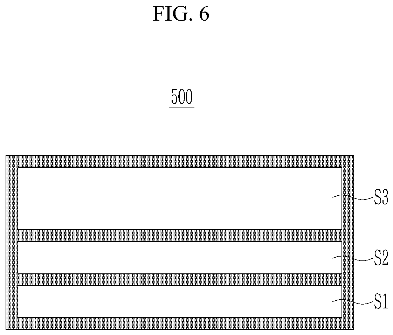

FIG. 4 illustrates a method of forming an active material according to an example embodiment of the present disclosure, and FIG. 5 and FIG. 6 illustrate top plan views of a slot die of an active material coating device shown in FIG. 4.

As shown in FIG. 4, an active material coating device according to an example embodiment of the present disclosure includes a slot die 500 that forms an active material layer 720 by applying the active material to a substrate 710 in a continuously supplied manner via a roller 51.

The slot die 500 according to the example embodiment of the present disclosure is connected to an external slurry supply source (not shown) to receive an active material slurry from the slurry supply source, and discharges the active material slurry through a discharge port of the slot die 500 to form the negative active material layer 720.

Referring to FIG. 2 and FIG. 5, discharge ports 510, 520, and 530 are formed in the slot die 500, and the discharge ports 510, 520, and 530 may include a first discharge port 510 for forming the lower layer 71, a second discharge port 520 for forming the middle layer 72, and a third discharge port 530 for forming the upper layer 73.

Accordingly, in the example embodiment of the present disclosure, the active material is contemporaneously or simultaneously discharged through the discharge ports 510, 520, and 530 of the slot die 500, so that the lower layer 71, the middle layer 72, and the upper layer 73 may be contemporaneously or simultaneously formed. Since the three layers 71, 72 and 73 are formed together at substantially the same time, portions at the boundaries of respective layers may be mixed with each other by gravity, density, or pressure. That is, the two layers 71 and 72 may be mixed with each other at the boundary therebetween, or the two layers 72 and 73 may be mixed with each other at the boundary therebetween.

Referring to FIG. 2, FIG. 5, and FIG. 6, the slot die 500 has three openings S1, S2, and S3, and a first spacer P1, a second spacer P2, and a third spacer P3 may be installed in the openings S1, S2, and S3, respectively. Accordingly, the shapes of the first discharge port 510, the second discharge port 520, and the third discharge port 530 may be determined by the form in which the first spacer P1, the second spacer P2, and the third spacer P3 are installed.

Respective spacers P1, P2, and P3 may be installed in the openings S1, S2, and S3 according to the shape of the active material layer to be formed, and portions of the openings S1, S2, and S3 may be blocked according to the shape of the active material layer of each, or at least one, layer to be formed to determine the shapes of the discharge ports 510, 520, and 530.

For example, the first spacers P1 are disposed on both sides of the first opening S1, respectively, and the opened portion between the first spacers P1 becomes the first discharge portion 510. In order to form the lower layer 71 on the substrate with a uniform thickness, the first discharge port 510 may have a long shape in one direction. That is, a width of the first spacer P1 may be adjusted so that a length L of the first discharge port 510 is the same, or substantially the same as a width D of the lower layer 71.

The second discharge port 520 is for forming the pattern layer 7 of the middle layer 72, and in order to form the portions or columns of the pattern layer 7 configured or arranged at regular intervals, a plurality of second spacers P2 may be disposed at regular intervals in the second opening S2. Accordingly, the pattern layer 7 may be continuously formed on the lower layer 72, and due to the presence of the plurality of second discharge ports 520 that are regularly spaced, the plurality of portions or columns of the pattern layer 7 may be formed, where each portion or column of the pattern layer 7 corresponds to a discharge port 520.

In this case, when the supply time of the active material slurry supplied to the second discharge port 520 is controlled, a plurality of portions or columns of the pattern layer 7 may be formed at regular lengths and intervals rather than in a continuous manner. Accordingly, the portions or columns of the pattern layer 7 may be disposed in a matrix as shown in FIG. 1.

The third discharge port 530 is for forming the filling layer 8 of the middle layer 72 together with the upper layer 73, and the third discharge port 530 includes a first small discharge port SS1 for discharging the filling layer 8 for filling the gap between the portions or columns of the pattern layer 7 and a second small discharge port SS2 for discharging the filling layer to cover the entire middle layer 72, similarly to the lower layer 71. The first small discharge port SS1 may be staggered with the second small discharge port 520, and the second small discharge port SS2 may have a long shape in one direction as the first discharge port 510. The first small discharge port SS1 and the second small discharge port SS2 may be connected to each other to form a single discharge port.

To form the first small discharge port SS1 and the second small discharge port SS2 of different shapes, the third spacer P3 includes at least a first portion PS1 and a second portion PS2.

The first portion PS1 of the third spacer P3 is at a location vertically corresponding to the second discharge port 520 and is between the first small discharge ports SS1, and the second portion PS2 of the third spacer P3 is on both sides of the second small discharge port SS2 of the first spacer P1. Accordingly, the length of the second small discharge port SS2 and the length L of the first discharge port 510 may be the same or substantially the same.

In this case, according to the thicknesses of the lower layer 71 and the upper layer 73 to be formed, the width DS1 of the first discharge port 510 and the width DS2 of the second portion PS2 of the third discharge port 530 may be different.

Meanwhile, since the viscosity of the active material slurry for forming the pattern layer 7 may maintain a constant pattern shape after application, the pattern layer 7 may have a higher viscosity than the viscosity for forming the upper layer 73 and the filling layer 8. The filling layer 8 may have higher fluidity than the pattern layer 7 because the filling layer 8 is configured to readily fill the space between the already formed portions or columns of the pattern layer 7, and may have a relatively lower viscosity than the pattern layer 7. When the solid portions of the upper layer 73, the filling layer 8, and the pattern layer 7 are the same at 50%, the viscosity of the upper layer 73 and the filling layer 8 may be equal to about 3,000 ± 1,500 mPas, the viscosity of the pattern layer 7 may be equal to about 9,500 ± 4,500 mPas, and the viscosity of the lower layer 71 may be equal to about 4,000 ± 1,000 mPas.

The viscosity of each, or at least one, layer may be adjusted by the binder content, and thus, the binder content of the lower layer 71 may be relatively high, so the viscosity thereof may also be high. In addition, the binder content of the upper layer 73 and the filling layer 8 may be relatively low, so the viscosity thereof may also be low.

The viscosity of each of the upper layer, filling layer and pattern layer may be measured using a HAAKE RV1 (Thermo Fisher) rheometer under measurement conditions (flow test mode) of 25 °C and shear rate of 0.1 to 1000 s⁻¹. The viscosity may refer to the viscosity of a slurry of components (e.g. active material, thickener, conductive material, and/or binder) that is used to form the respective layer during manufacture of the electrode. For example, if the slurry comprises active material, thickener, conductive material, and binder, the slurry may be prepared as follows: active material input -> thickener input -> conductive material input -> binder input, mixing at 2000 rpm for 2 minutes with Thinky mixer (revolution-rotation mixer) for each step.

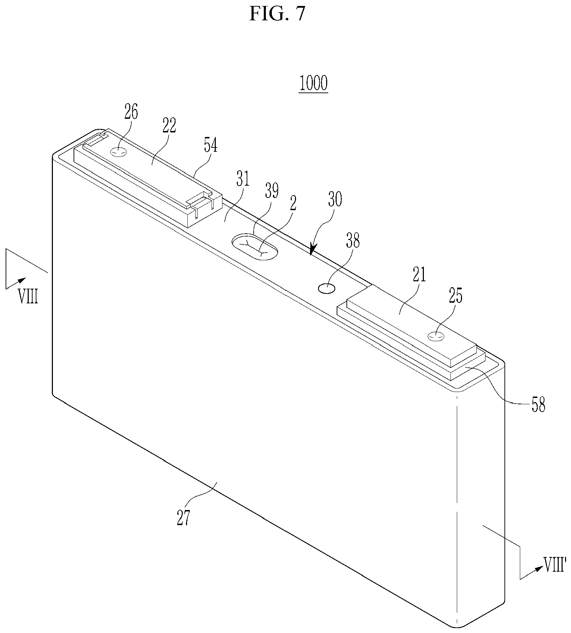

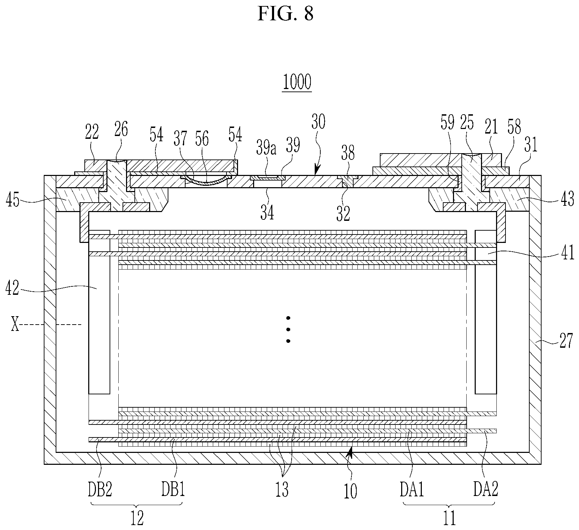

FIG. 7 illustrates a schematic perspective view of a rechargeable battery 1000 according to an example embodiment of the present disclosure, and FIG. 8 is a cross-section view along line VIII-VIII' of FIG. 7.

Herein, a lithium rechargeable battery 1000 according to an embodiment is described as an example in which a winding type (jelly roll type) electrode assembly is placed in a prismatic case, but examples of the present disclosure are not limited thereto, and an electrode assembly such as, e.g., a stack type, a stack and folding type, and a Z-folding type, may be applied to a battery in a case, the case being one of a cylindrical type, a pouch type, and a coin type.

As shown in FIG. 7 and FIG. 8, a rechargeable battery 1000 according to the example embodiment includes an electrode assembly 10, a case 27 accommodating the electrode assembly 10, and a cap assembly 30 installed in an opening of the case 27.

The electrode assembly 10 includes a positive electrode 11 and a negative electrode 12, which are stacked, for example, sequentially stacked, and a separator 13 therebetween. The separator 13 is located between the positive electrode 11 and the negative electrode 12 and insulates the positive electrode 11 and the negative electrode 12 from each other.

The electrode assembly 10 may be a jelly roll type that is wound around a winding axis X with a separator 13 interposed between the positive electrode (cathode, or first electrode) 11 and the negative electrode (anode, or second electrode) 12 and then pressed flat.

The separator 13 may be or include a polymer film through which lithium ions may pass, and polyethylene, polypropylene, or polyvinylidene fluoride. A multifilm of two or more layers thereof may be used as the separator 13. A mixed multifilm such as a polyethylene/polypropylene double-layered separator, a polyethylene/polypropylene/polyethylene triple-layered separator, or a polypropylene/polyethylene/polypropylene triple-layered separator may be used as the separator 13.

The positive electrode 11 includes an electrode active area and an electrode uncoated area, and the electrode active area includes a substrate formed of or including a thin plate metal foil and a positive active material layer, and the positive active material may be on the substrate. The electrode uncoated area is an area in which the positive active material layer is not formed and the substrate is exposed, and may be a portion extending from the substrate of the electrode active area.

The electrode uncoated area DA2 of the positive electrode 11 may be located at one side end of the positive electrode 11 along the length direction of the positive electrode 11.

The substrate of the positive electrode 11 may be or include aluminium, and as a positive active material, a compound capable of reversible intercalation and deintercalation of lithium (lithiated intercalation compound) may be used. For example, one or more of composite oxides of a metal selected from, e.g., cobalt, manganese, nickel, and a combination thereof and lithium may be used. In the positive electrode, the content of the positive active material may be about 90 wt% to 98 wt% based on the total weight of the positive active material layer.

In the example embodiment of the present disclosure, the positive active material may further include a binder and a conductive material. In this case, the content of the binder and the conductive material may be about 1 wt% to 5 wt%, respectively, based on the total weight of the positive active material layer.

The binder may be configured to, or serve to, adhere the positive active material particles to each other and also to adhere the positive active material to the positive electrode substrate. Representative examples of the binder include polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene butadiene rubber, acrylated styrene butadiene rubber, epoxy resin, nylon, and the like, but are not limited thereto.

The conductive material is used in order to give conductivity to the electrode, and may be any material as long as the electronic conductive material does not trigger a chemical change in the battery configured.

The negative electrode 12 may be the above-described negative electrode shown in FIG. 1. The negative electrode 12 may include a substrate and an active material layer formed on the substrate and including a lower layer, a middle layer, and an upper layer. The active material layer may include a pattern layer made of or including a silicon-based active material, and a lower layer, a filling layer, and an upper layer made of or including a carbonization-based active material.

The negative electrode 12 includes an electrode active area DB1 and an electrode uncoated area DB2, and the electrode active area DB1 includes a substrate formed of or including a thin plate metal foil and a negative active material layer made of or including a negative active material on the substrate (or middle layer). The electrode uncoated area DB2 is an area in which the negative active material layer is not formed and the substrate is exposed, and may be a portion extending from the substrate of the electrode active area DB1.

The electrode uncoated area DB2 of the negative electrode 12 may be located at one side end of the negative electrode 12 along the length direction of the negative electrode 12. In this case, the electrode uncoated area DA2 of the positive electrode 11 and the electrode uncoated area DB2 of the negative electrode 12 may be located on opposite sides of the electrode active areas DA1 and DB1.

The electrode uncoated areas of the positive and negative electrodes 11 and 12 may have a shape that protrudes at regular intervals along the wound direction from the substrate, or may be positioned at a front end or an end of the wound electrode assembly 10.

Meanwhile, the electrode assembly 10 may be accommodated in the case 27 together with an electrolyte, and the electrolyte may include a non-aqueous organic solvent and a lithium salt.

The non-aqueous organic solvent may serve as a medium through which ions involved in the electrochemical reaction of the battery may move.

The lithium salt is a substance that dissolves in an organic solvent and acts as a supply source of lithium ions in the battery, enabling the basic operation of a lithium rechargeable battery 1000 and promoting the movement of lithium ions between the positive electrode and the negative electrode. Representative examples of the lithium salt include one or two or more selected from LiPF₆, LiBF₄, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) (where x and y are natural numbers, for example, integers from 1 to 20), LiCl, Lil, and LiB(C₂O₄)₂ (lithium bis(oxalato) borate (LiBOB)), as a supporting electrolytic salt. In various examples, the concentration of the lithium salt may be within the range of about 0.1 M to 2.0 M. When the concentration of the lithium salt is included within the above range, an improved electrolyte performance may be achieved because the electrolyte has appropriate conductivity and viscosity, and lithium ions may move more effectively.

The case 27 may be made of or include a metal such as aluminium, and may have a substantially rectangular parallelepiped shape. One side of the case 27 may be opened, and a cap plate 31 may be installed on the opened side of the case 27.

The cap assembly 30 includes a cap plate 31 coupled to the case 27 to block the opening of the case 27, a positive terminal 21 electrically connected to the positive electrode 11, and a negative terminal 22 electrically connected to the negative electrode 12, wherein the positive and negative terminals 21 and 22 protrude to the outside of the cap plate 31.

The cap plate 31 is formed in the form of a long plate extending in one direction and is coupled to the opening of the case 27.

The cap plate 31 may have an injection hole 32 penetrating the inside. The injection hole 32 is for injecting an electrolyte solution, and is installed with a sealing stopper 38. In addition, a vent plate 39 with a notch 39a is installed in a vent hole 34 so that the cap plate 31 may be opened at a set pressure.

The positive terminal 21 and the negative terminal 22 are installed to protrude upward from the cap plate 31. The positive terminal 21 is electrically connected to the positive electrode 11 through the current collecting tab 41, and the negative terminal 22 is electrically connected to the negative electrode 12 through the current collecting tab 42.

A terminal connection member 25 is installed between the positive terminal 21 and the current collecting tab 41 to electrically connect the positive terminal 21 and the current collecting tab 41. The terminal connection member 25 is inserted into the hole formed in the positive terminal 21, so that the upper end thereof is fixed to the positive terminal 21 by, e.g., welding or other coupling methods, and the lower end thereof is fixed to the current collecting tab 41 by, e.g., welding or other coupling methods.

Between the terminal connection member 25 and the cap plate 31, a sealing gasket 59 may be inserted into the hole through which the terminal connection member 25 extends, and a lower insulating member 43 into which a lower portion of the terminal connection member 25 is inserted is installed under the cap plate 31. A connection plate 58 is installed between the positive terminal 21 and the cap plate 31 to electrically connect the positive terminal 21 to the cap plate 31. The terminal connection member 25 is inserted into the connection plate 58. Accordingly, the cap plate 31 and the case 27 are charged with the positive electrode 11.

A terminal connection member 26 is installed between the negative terminal 22 and the current collecting tab 42 to electrically connect the negative terminal 22 to the current collecting tab 42. The terminal connection member 26 is inserted into the hole formed in the negative terminal 22, so that the upper end thereof is fixed to the negative terminal 22 by, e.g., welding or other coupling methods, and the lower end thereof is fixed to the current collecting tab 42 by, e.g., welding or other methods.

Between the negative terminal 22 and the cap plate 31, a sealing gasket 59 is inserted and installed into the hole through which the terminal connection member 26 passes, and an upper insulating member 54 is installed to insulate the negative terminal 22 from the cap plate 31. The terminal connection member 26 may be installed by being inserted into a hole of the upper insulating member 54, and the upper insulating member 54 may be formed to surround an end of the negative terminal 22.

In addition, under the cap plate 31, a lower insulating member 45 may be installed to insulate the negative terminal 22 and the current collecting tab 42 from the cap plate 31.

A short-circuiting hole 37 is formed in the cap plate 31, and a short-circuiting member 56 is installed in the short-circuiting hole 37. The short-circuiting member 56 includes a curved portion convexly curved downward in an arc shape and an edge portion formed on the outside of the curved portion and fixed to the cap plate 31. The upper insulating member 54 may have a cutout that overlaps the short-circuiting hole 37, and the short-circuiting member 56 overlaps the negative terminal 22 exposed through the cutout.

The short-circuiting member 56 is electrically connected to the cap plate 31, and is deformed when the internal pressure of the rechargeable battery 1000 increases, causing short-circuiting between the positive electrode 11 and the negative electrode 12. In other words, when gas is generated due to an abnormal reaction inside the rechargeable battery 1000, the internal pressure of the rechargeable battery 1000 increases. When the internal pressure of the rechargeable battery 1000 becomes higher than a preset pressure, the curved portion may be deformed to be convex upward, and at this time, the negative terminal 22 and the short-circuiting member 56 may come into contact with each other, causing a short-circuit.

In order to facilitate short-circuiting between the negative terminal 22 and the short-circuiting member 56, the negative terminal 22 may further include at least one protrusion (not shown) protruding toward the short-circuiting member 56, and the protrusion may be spaced apart from the short-circuiting member 56.

While this disclosure has been described in connection with what is presently considered to be example embodiments, it is to be understood that the disclosure is not limited to the disclosed example embodiments, but, on the contrary, is intended to cover various modifications and equivalent configurations or arrangements included within the scope of the appended claims.

### <Description of symbols>

| | | | |
|---|---|---|---|
| 7: | pattern layer | 8: | filling layer |
| 10: | electrode assembly | 11: | positive electrode |
| 12, 700: | negative electrode | 13: | separator |
| 21: | positive terminal | 22: | negative terminal |
| 27: | case | 30: | cap assembly |
| 41, 42: | current collecting tab | 71: | lower layer |
| 72: | middle layer | 73: | upper layer |
| 500: | slot die | 510, 520, 530: | discharge port |
| 710: | substrate | 720: | negative active material layer |
| 1000: | rechargeable battery | | |
| P1, P2, P3: | spacer | | |
| S1, S2, S3: | opening | | |

Embodiments are set out in the following clauses:
Clause 1. An electrode for a rechargeable battery, comprising:
   a substrate,
   a lower layer formed on the substrate,
   a pattern layer formed on the lower layer,
   a filling layer formed on the lower layer and disposed between the pattern layers, and
   an upper layer formed on the pattern layer and the filling layer.
Clause 2. The electrode for the rechargeable battery of clause 1, wherein
   the pattern layer has relatively greater expansion properties than the filling layer, the lower layer, and the upper layer, and
   the filling layer, the lower layer, and the upper layer have relatively smaller expansion properties than the pattern layer.
Clause 3. The electrode for the rechargeable battery of clause 2, wherein
   the lower layer, the filling layer, and the upper layer include a carbon-based active material, and
   the pattern layer includes a silicon-based active material.
Clause 4. The electrode for the rechargeable battery of clause 2 or clause 3, wherein
   the filling layer and the upper layer are made of the same active material.
Clause 5. The electrode for the rechargeable battery of any one of clauses 1 to 4, wherein
   the pattern layer has a higher viscosity than the filling layer and the upper layer.
Clause 6. The electrode for the rechargeable battery of clause 5, wherein
   the viscosity of the upper layer and the filling layer is 3,000±1,500 mPas, and
   the viscosity of the pattern layer is 9,500±4,500 mPas.
Clause 7. The electrode for the rechargeable battery of any one of clauses 1 to 6, wherein
   the pattern layer is configured of a plurality of columns having a long length in one direction.
Clause 8. The electrode for the rechargeable battery of any one of clauses 1 to 7, wherein
   the pattern layers are arranged in a matrix.
Clause 9. An electrode assembly comprising:
   a negative electrode of any one of clause 1 to clause 8,
   a positive electrode overlapping the negative electrode, and
   a separator disposed between the negative electrode and the positive electrode.
Clause 10. An active material coating device, comprising:
   a slot die provided with a first opening, a second opening, and a third opening,
   first spacers respectively installed on both sides of the first opening to form a first discharge port,
   second spacers installed at regular intervals in the second opening to form a plurality of second discharge ports, and
   a third spacer installed in the third opening to form a third discharge port,
   wherein the third spacer includes a first portion installed at a position corresponding to the second discharge port of the third opening and a second portion installed at a portion corresponding to the first spacer.
Clause 11. The active material coating device of clause 10, wherein
   the third discharge port includes a first small discharge port corresponding to the second spacer and a second small discharge port corresponding to the first discharge port, and
   the first small discharge port and the second small discharge port are connected to form one discharge port.

## Claims

1. An electrode for a rechargeable battery, comprising:
a substrate,
a lower layer formed on the substrate,
a pattern layer formed on the lower layer, the pattern layer having a plurality of portions thereof,
a filling layer formed on the lower layer and located between the plurality of portions of the pattern layer, and
an upper layer formed on the pattern layer and the filling layer.

2. The electrode for the rechargeable battery of claim 1, wherein
an expansion property of the pattern layer is greater than expansion properties of the filling layer, the lower layer, and the upper layer.

3. The electrode for the rechargeable battery of claim 2, wherein
at least one of the lower layer, the filling layer, and the upper layer include a carbon-based active material, and
the pattern layer includes a silicon-based active material.

4. The electrode for the rechargeable battery of claim 2 or claim 3, wherein
the filling layer and the upper layer comprise a same active material.

5. The electrode for the rechargeable battery of any one of claims 1 to 4, wherein
a viscosity of the pattern layer is greater than viscosities of the filling layer and of the upper layer.

6. The electrode for the rechargeable battery of claim 5, wherein
the viscosity of the upper layer and the filling layer is about 3,000±1,500 mPas, and
the viscosity of the pattern layer is about 9,500±4,500 mPas.

7. The electrode for the rechargeable battery of any one of claims 1 to 6, wherein
the plurality of portions of the pattern layer comprise a plurality of columns having a length in one direction.

8. The electrode for the rechargeable battery of any one of claims 1 to 7, wherein
the plurality of portions of the pattern layer are arranged in a matrix.

9. An electrode assembly comprising:
a negative electrode comprising the electrode of any one of claims 1 to 8,
a positive electrode overlapping the negative electrode, and
a separator between the negative electrode and the positive electrode.

10. An active material coating device, comprising:
a slot die having a first opening, a second opening, and a third opening,
first spacers respectively located on both sides of the first opening to form a first discharge port,
second spacers located at regular intervals in the second opening to form a plurality of second discharge ports, and
a third spacer located in the third opening to form a third discharge port,
wherein the third spacer includes a first portion located at a position corresponding to one of the plurality of second discharge ports of the second opening, and a second portion located at a position corresponding to one of the first spacers of the first opening.

11. The active material coating device of claim 10, wherein
the third discharge port includes a first small discharge port at a location corresponding to the second spacer of the second opening and a second small discharge port at a location corresponding to the first discharge port, and
the first small discharge port and the second small discharge port are connected to form the third discharge port.
